# EUROPEAN PATENT APPLICATION

(11) **EP 4 831 958 A1**
(43) Date of publication of application: **28.10.2026**
(21) Application number: 26166062.5
(22) Date of filing: 19.03.2026
(51) Int. Cl.: G08G 1/0962, B60K 35/22, B60K 35/29, B60R 1/00, B60R 1/28, B60W 50/14, G06V 20/56

(54) **DISPLAY CONTROL DEVICE, DISPLAY CONTROL METHOD, AND RECORDING MEDIUM STORED WITH DISPLAY CONTROL PROGRAM**

(30) Priority: 23.04.2025 JP 2025071777
(71) Applicant: Toyota Jidosha Kabushiki Kaisha, Toyota-shi, Aichi-ken 471-8571 (JP); DENSO CORPORATION, Kariya-shi Kariya-shi, Aichi-ken 448-8661 (JP)
(72) Inventor: FANG, Zhicheng, TOYOTA-SHI, AICHI-KEN, 471-8571 (JP); KONISHI, Shogo, TOYOTA-SHI, AICHI-KEN, 471-8571 (JP); NISHIDA, Takashi, TOYOTA-SHI, AICHI-KEN, 471-8571 (JP); HATTORI, Tsutomu, TOYOTA-SHI, AICHI-KEN, 471-8571 (JP); TAKADA, Arata, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

A display control device including a control unit that displays a host vehicle image illustrating a host vehicle and a surrounding condition image illustrating surrounding conditions of the host vehicle at a display unit and, when an acquired steering angle of the host vehicle is a threshold value or greater, executes control to dispose the host vehicle image at a pre-set position, and/or executes control to change a display mode of the surrounding condition image to pre-set content.

## Description

### BACKGROUND

### Technical Field

The present disclosure relates to a display control device, a display control method, and a recording medium storing a display control program.

### Related Art

Japanese Patent No. 7048398 discloses a vehicle control device capable of performing autonomous driving that imparts a sense of security to an occupant.

### SUMMARY

In the technology according to Japanese Patent No. 7048398, an image illustrating an host vehicle and surrounding conditions thereof is displayed at a display unit (see, for example, Fig. 8 of Japanese Patent No. 7048398).

Although configuration to display information about the surroundings of an host vehicle at a display unit is hitherto known technology, the information displayed does not always have high noticeability to a driver, and there is still room for improvement from the perspective of raising noticeability of display content.

An object of the present disclosure is to provide a display control device, a display control method, and a recording medium storing a display control program that, by appropriately controlling display content in situations in which a steering angle is a threshold value or greater, are able to make it easy for surrounding conditions of an host vehicle to be recognized by a driver.

A display control device according to a first aspect includes a control unit that displays a host vehicle image illustrating a host vehicle and a surrounding condition image illustrating surrounding conditions of the host vehicle at a display unit and, when an acquired steering angle of the host vehicle is a threshold value or greater, executes control to dispose the host vehicle image at a pre-set position, and/or executes control to change a display mode of the surrounding condition image to pre-set content.

In the display control device according to the first aspect, the control unit displays the host vehicle image and the surrounding condition image on the display unit. Then when the acquired steering angle of the host vehicle is the threshold value or greater, the control unit executes control to dispose the host vehicle image at a pre-set position, and/or executes control to change a display mode of the surrounding condition image to pre-set content. By controlling the display content appropriately in situations in which the steering angle is the threshold value or greater in this manner, the display control device makes it easy for the surrounding conditions to be recognized by the driver.

A display control device according to a second aspect is the first aspect, wherein in a case in which the acquired steering angle is the threshold value or greater, the control unit changes an other-vehicle image illustrating an other-vehicle displayed as the surrounding condition image to a specific state that is not perceivable by a driver of the host vehicle.

In the display control device according to the second aspect, the control unit changes the other-vehicle image to a specific state that is not perceivable by the host vehicle driver in a case in which the acquired steering angle is the threshold value or greater. By changing the other-vehicle image to the specific state in this manner, the display control device prevents movement of the other-vehicle image from being represented differently from the actual movement of the other-vehicle, enabling misrecognition by the driver to be suppressed.

A display control device according to the third aspect is the first aspect or the second aspect, wherein in a case in which the acquired steering angle is the threshold value or greater, the control unit displays the host vehicle image fixed at a width direction central position of a road surface image that illustrates a travel lane in which the host vehicle is traveling and that is being displayed as the surrounding condition image.

In the display control device according to the third aspect, the control unit displays the host vehicle image fixed at the width direction central position of the road surface image in a case in which the acquired steering angle is the threshold value or greater. The display control device accordingly raises display stability, making it easier for a driver to ascertain vehicle position.

A display control device according to a fourth aspect is any one of the first aspect to the third aspect, wherein in a case in which the acquired steering angle is the threshold value or greater, the control unit displays a road surface image that illustrates a travel lane in which the host vehicle is traveling and that is being displayed as the surrounding condition image, with a display mode of the road surface image fixed to a straight line representation illustrating a straight road.

In the display control device according to the fourth aspect, the control unit displays the road surface image with a display mode of the road surface image fixed to a straight line representation illustrating a straight road in a case in which the acquired steering angle is the threshold value or greater. The display control device accordingly suppresses display flickering, making it easier for the driver to recognize the progression direction.

The display control device according to the fifth aspect is any one of the first aspect to the fourth aspect, wherein in a case in which the acquired steering angle falls below the threshold value, the control unit returns display of at least one of the host vehicle image or the surrounding condition image to a display state prior to the control.

In the display control device according to the fifth aspect, the control unit returns display of at least one of the host vehicle image or the surrounding condition image to the display state prior to the control in a case in which the acquired steering angle falls below the threshold value. Due to the display control device returning to the display state prior to the control, display control appropriate to the driving condition is maintained, making it easier for the driver to ascertain the surrounding conditions.

A display control device according to a sixth aspect is any one of the first aspect to the fifth aspect, wherein the display unit is a meter display provided at a vehicle front side of a driver's seat of the host vehicle.

In the display control device according to the sixth aspect, the display unit is the meter display provided at the vehicle front side of the driver's seat of the host vehicle. This means that with the display control device, even in situations in which the steering angle is the threshold value or greater, a driver is able to intuitively ascertain the surrounding condition along an extension of a forward field of view, enabling appropriate situational awareness while maintaining noticeability.

A display control method according to a seventh aspect is processing executable by a computer to perform processing. The processing includes displaying a host vehicle image illustrating a host vehicle and a surrounding condition image illustrating surrounding conditions of the host vehicle at a display unit, and, when an acquired steering angle of the host vehicle is a threshold value or greater, performing at least one of: executing control to dispose the host vehicle image at a pre-set position, and/or executing control to change a display mode of the surrounding condition image to pre-set content.

In the display control method according to the seventh aspect, the computer executes the processing of displaying the host vehicle image and the surrounding condition image on the display unit, and, when the acquired steering angle of the host vehicle is the threshold value or greater, performing at least one of: executing control to dispose the host vehicle image at the pre-set position, and/or executing control to change the display mode of the surrounding condition image to the pre-set content. The display control method accordingly controls the display content appropriately in situations in which the steering angle is the threshold value or greater, making it easy for the surrounding conditions to be recognized by a driver.

An eighth aspect is a non-transitory recording medium storing a display control program. The display control program causes a computer to execute processing including displaying a host vehicle image illustrating a host vehicle and a surrounding condition image illustrating surrounding conditions of the host vehicle at a display unit and, when an acquired steering angle of the host vehicle is a threshold value or greater, performing at least one of: executing control to dispose the host vehicle image at a pre-set position, and/or executing control to change a display mode of the surrounding condition image to pre-set content.

In the display control program according to the eighth aspect, processing executed by the computer includes displaying the host vehicle image and the surrounding condition image on the display unit, and, when the acquired steering angle of the host vehicle is the threshold value or greater, performing at least one of: executing control to dispose the host vehicle image at the pre-set position, and/or executing control to change the display mode of the surrounding condition image to the pre-set content. The display control program accordingly controls the display content appropriately in situations in which the steering angle is the threshold value or greater, making it easy for the surrounding conditions to be recognized by a driver.

As described above, the display control device, the display control method, and the recording medium recorded with the display control program according to the present disclosure accordingly control the display content appropriately in situations in which the steering angle is the threshold value or greater, making it easy for the surrounding conditions of the host vehicle to be recognized by a driver.

### BRIEF DESCRIPTION OF THE DRAWINGS

Exemplary embodiments of the present disclosure will be described in detail based on the following figures, wherein:
Fig. 1 is a block diagram illustrating a schematic configuration of a vehicle;
Fig. 2 is a schematic diagram of a front section of the interior of a vehicle cabin of a vehicle, looking from a vehicle rear side;
Fig. 3 is an explanatory diagram to explain a display area on a first display unit;
Fig. 4 is a block diagram illustrating a schematic configuration of a display control device;
Fig. 5 is a block diagram illustrating an example of a functional configuration of a display control device;
Fig. 6 is a flowchart illustrating a flow of specific processing;
Fig. 7 is a first explanatory diagram to explain surrounding conditions of a vehicle at an intersection;
Fig. 8 is a first explanatory diagram illustrating a display example displayed on a display area of a first display unit;
Fig. 9 is a second explanatory diagram illustrating a display example displayed on a display area of a first display unit;
Fig. 10 is an explanatory diagram to explain types of demarcation line image;
Fig. 11 is a second explanatory diagram to explain surrounding conditions of a vehicle at an intersection; and
Fig. 12 is a third explanatory diagram illustrating a display example displayed on a display area of a first display unit.

### DETAILED DESCRIPTION

Description follows regarding a vehicle 10 according to the present exemplary embodiment.

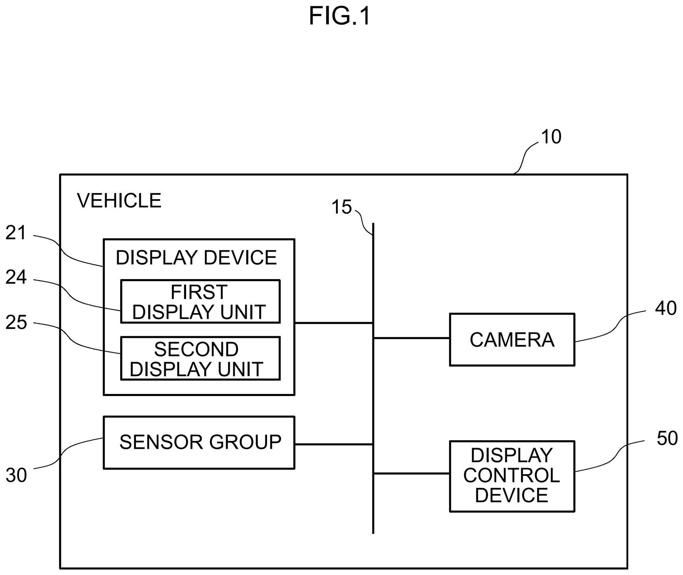

Fig. 1 is a block diagram illustrating a schematic configuration of the vehicle 10.

As illustrated in Fig. 1, the vehicle 10 includes a display device 21, a sensor group 30, cameras 40, and a display control device 50. These configuration elements are mutually connected through an external bus (communication bus) 15.

The display device 21 displays images related to proposals for operations related to the functions of the vehicle 10, explanations of these functions, and the like. In the present exemplary embodiment, a first display unit 24 and a second display unit 25 are provided as the display device 21. The first display unit 24 is an example of a "display unit" of the present disclosure. Note that details are given later regarding the first display unit 24 and the second display unit 25.

The sensor group 30 includes various sensors for detecting a state and surrounding conditions of the vehicle 10. Specifically, the sensor group 30 includes a 3D-LiDAR, a microwave sensor, an infrared sensor, a turn indicator sensor, an acceleration position sensor, a shift position sensor, an illumination sensor, a vehicle speed sensor, a steering angle sensor, an angular velocity sensor, a global positioning system (GPS) sensor, a gyrosensor, and/or an accelerometer. The sensor group 30 outputs detection results from each of the sensors to the display control device 50.

The cameras 40 are imaging devices that each perform imaging using an imaging device such as a charge coupled device (CCD) image sensor, a complementary metal oxide semiconductor (CMOS) image sensor, or the like. The cameras 40 are provided to the front, rear, left side, and right side of the vehicle 10, and image conditions in the periphery of the vehicle 10. For example, images captured by the camera 40 provided at the vehicle front are employed to recognize other vehicles traveling in front of a vehicle, inter-vehicle distance to other vehicles, vehicle lanes, traffic lights, and the like. The images captured by the cameras 40 are output to the display control device 50. Note that the cameras 40 may be configured by imaging devices used in other applications, such as in a drive recorder, advanced driver assistance system (ADAS), or the like.

The display control device 50 may, for example, be an electronic control unit (ECU) that performs various controls.

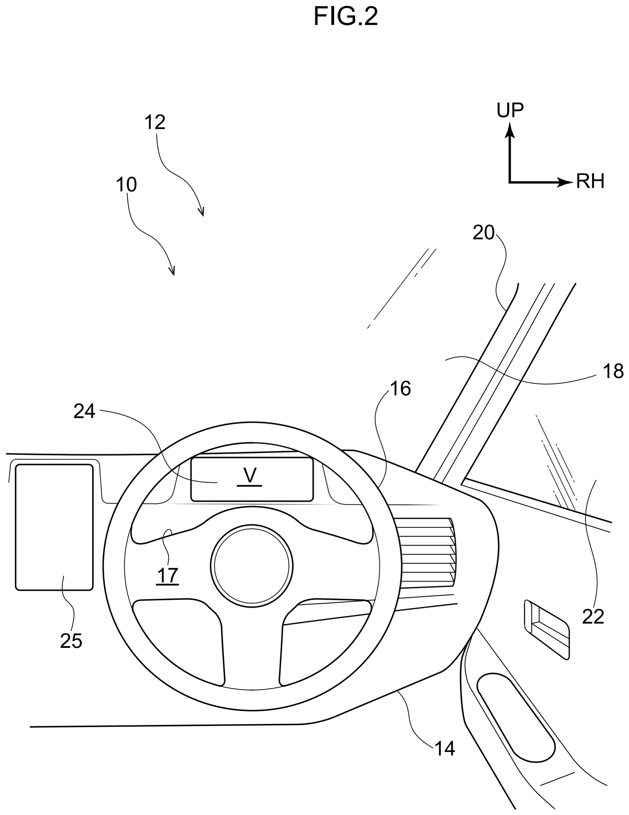

Fig. 2 is a schematic diagram illustrating a front section of an interior of a vehicle cabin 12 of the vehicle 10, as viewed from the vehicle rear side. In Fig. 2, arrow UP indicates upward in a vehicle height direction, and arrow RH indicates a vehicle width direction right side. In the following description, reference to up and down directions and left and right directions respectively indicate up and down in the vehicle height direction, and left and right in the vehicle width direction.

As illustrated in Fig. 2, an instrument panel 14 is provided in the front section interior of the vehicle cabin 12 of the vehicle 10. The instrument panel 14 extends along the vehicle width direction, with a steering wheel 16 provided at a vehicle right side of the instrument panel 14. Namely, the vehicle 10 is, as an example, a right hand drive vehicle with the steering wheel 16 provided on the right, and a driver's seat provided on the vehicle right side. Note that there is no limitation thereto, and the vehicle 10 may be a left hand drive vehicle with the driver's seat provided on the vehicle left side.

A windshield glass 18 is provided at a front end portion of the instrument panel 14. The windshield glass 18 extends in both the vehicle height direction and the vehicle width direction, and partitions between the interior of the vehicle cabin 12 and the exterior of the vehicle cabin 12.

A vehicle right side end portion of the windshield glass 18 is fixed to a vehicle right side front pillar 20. The front pillar 20 extends in the vehicle height direction, and the windshield glass 18 is fixed to a vehicle width direction inside end portion of this front pillar 20. A front end portion of a front side glass 22 is fixed to a vehicle width direction outside end portion of the front pillar 20. Note that a vehicle left side end portion of the windshield glass 18 is fixed to a non-illustrated vehicle left side front pillar.

A first display unit 24 equipped with an image display area V is provided to the instrument panel 14. The first display unit 24 is configured by a meter display provided at a vehicle front side of the driver's seat on the vehicle right side of the instrument panel 14. The first display unit 24 is connected to various meter instruments installed to the vehicle 10, and is provided at a position falling within the visual field of the driver in a state gazing in the vehicle forward direction.

The second display unit 25 is also provided to the instrument panel 14. The second display unit 25 is configured by a center display installed to a vehicle width direction central portion of the instrument panel 14.

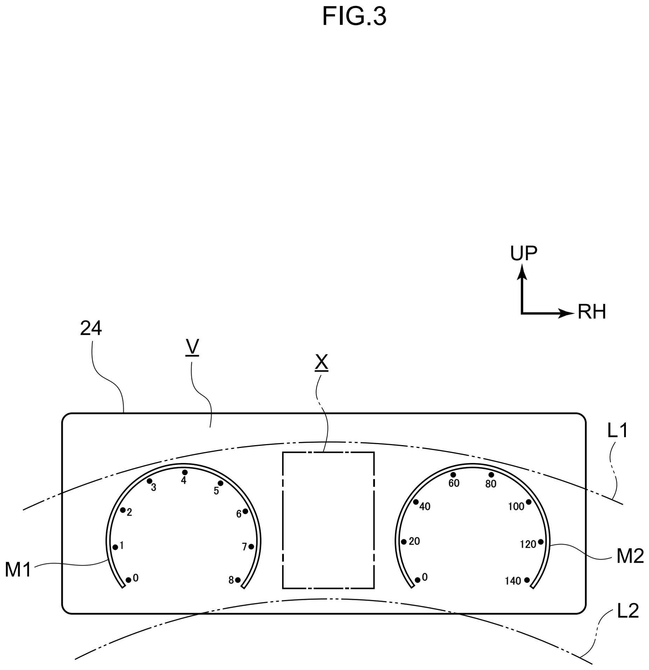

Fig. 3 is a diagram to explain a display area of the meter display, serving as a display area V of the first display unit 24.

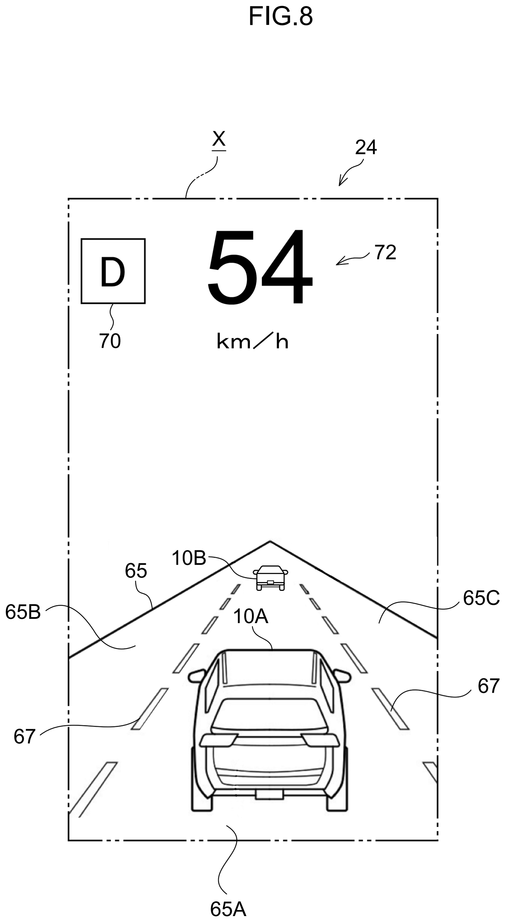

The display area V of the first display unit 24 is illustrated in Fig. 3. In the present exemplary embodiment, a vehicle image 10A (see Fig. 8 etc.), which is an image illustrating the vehicle 10, and a surrounding condition image, which is an image illustrating surrounding conditions of the vehicle 10, are displayed in a display area X, this being part of the display area V. Note that specific examples of such images are described later.

The display area X is a region visible to a driver seated in the driver's seat through an opening 17 in the steering wheel 16 (see Fig. 2). Specifically, as illustrated in Fig. 3, the display area X is center of a visible region between an upper edge line L1 of the opening 17, and a lower edge line L2. Meter displays M1, M2 illustrating measurement instrument meters of the vehicle 10 are displayed in the display area V at the left and right of the display area X.

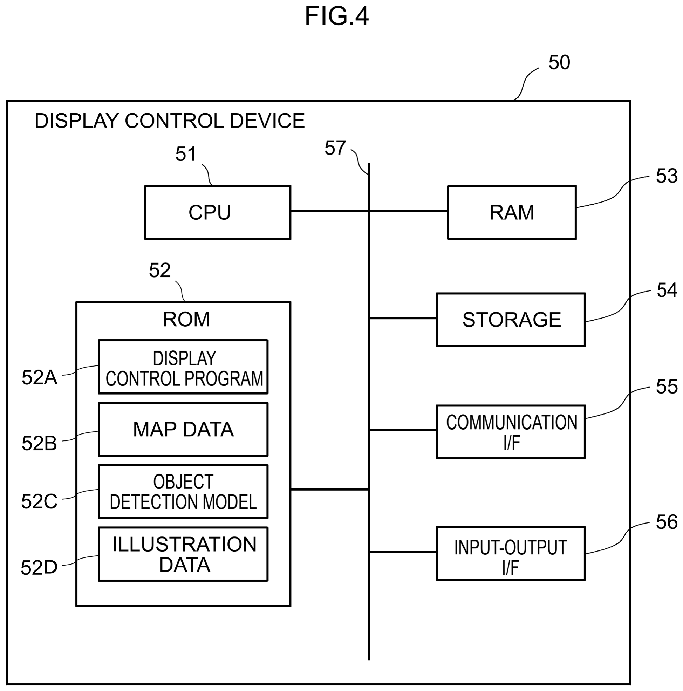

Fig. 4 is a block diagram illustrating a schematic configuration of the display control device 50. The display control device 50 is an example of a "display control device" and a "computer" of the present disclosure.

As illustrated in Fig. 4, the display control device 50 is configured including a central processing unit (CPU) 51, read only memory (ROM) 52, random access memory (RAM) 53, storage 54, a communication interface (I/F) 55, and an input-output I/F 56. Each of the configuration elements are connected together through an internal bus 57 so as to be capable of communicating with each other.

The CPU 51 is a central processing unit that executes various programs and controls each section. Namely, the CPU 51 reads a program from the ROM 52, and executes the program using the RAM 53 as a work area. The CPU 51 is an example of a "processor" of the present disclosure.

The ROM 52 is stored with various programs and various data. The RAM 53 serves as a work area for temporarily storing programs and/or data.

The storage 54 is configured by a storage medium, such as an embedded MultiMediaCard (eMMC), Universal Flash Storage (UFS), or the like, and stores various programs and various data. The storage 54 and the CPU 51 are connected together by the eMMC or UFS interface

Moreover, each of the components provided in the display control device 50, such as the ROM 52, the storage 54, and the like, are preferably a medium having tamper resistance, such as a hardware security module (HSM).

The communication I/F 55 is an interface for connecting to other ECUs. This interface employs a communication standard by Ethernet (registered trademark).

The input-output I/F 56 is an interface to communicate with onboard devices installed to the vehicle 10, such as the display device 21, the sensor group 30, and the cameras 40.

A display control program 52A, map data 52B, an object detection model 52C, and illustration data 52D are stored in the ROM 52.

The display control program 52A is a program to execute various processing in the CPU 51. When the display control program 52A is executed, the display control device 50 uses the configuration illustrated in Fig. 4 to execute processing based on the display control program 52A. The display control program 52A is an example of a "display control program" of the present disclosure.

The map data 52B is high-precision map data representing a map of the entire country for the location of the vehicle 10.

The object detection model 52C is a model input with images captured by the cameras 40 for performing region recognition of objects appearing in the captured images and object class (classification) determination. The object detection model 52C may, for example, be configured using an applicable known model, such as a you only look once (YOLO) or a single shot multibox detector (SSD).

The objects referred to above include, for example, people, animals, vehicles, and the like. The classes referred to above include a child, an adult, a pensioner, and the like for people, a dog, a cat, a horse, and the like for animals, a two-wheeled vehicle, a three-wheeled vehicle, a four-wheeled vehicle, and the like for vehicles.

The illustration data 52D is data representing illustration designs for each object to be displayed on the first display unit 24.

Next, description follows regarding a functional configuration of the display control device 50.

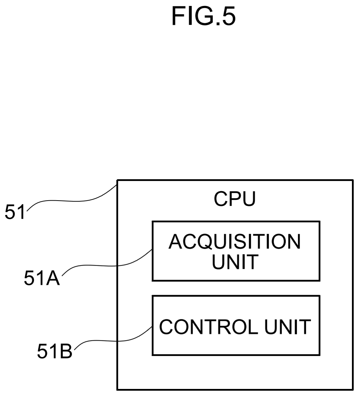

Fig. 5 is a block diagram illustrating an example of a functional configuration of the display control device 50.

As illustrated in Fig. 5, the CPU 51 of the display control device 50 includes, as functional configuration, an acquisition unit 51A and a control unit 51B. Each of these functional configurations is realized by the CPU 51 reading out and executing the display control program 52A stored in the ROM 52. The control unit 51B is an example of a "control unit" of the present disclosure.

The acquisition unit 51A acquires various information acquirable by the vehicle 10. Specifically, as the various information, the acquisition unit 51A acquires detection information of detection results of the various sensors configuring the sensor group 30, images captured by the cameras 40, and the like.

The control unit 51B performs display control related to display on the display device 21. For example, as the display control, based on detection information acquired by the acquisition unit 51A, the control unit 51B displays the vehicle image 10A and surrounding condition image on the first display unit 24 as viewed from a virtual viewpoint.

The "virtual viewpoint" referred to here is a viewpoint set in 3-dimensional virtual space having a position of the vehicle image 10A as the origin, with the virtual viewpoint defined by given viewpoint coordinates and viewpoint angle (direction) in virtual space. As an example, the virtual viewpoint is a viewpoint looking down at a designated viewpoint angle at the vehicle 10 and the periphery thereof from coordinates of a specific viewpoint positioned above a vehicle image 10A in virtual space. The surrounding condition image includes a road surface image 65 (see Fig. 8) illustrating a road surface including a sidewalk and a road travelled by the vehicle 10, and an object image illustrating an object other than the vehicle 10, such as other vehicles, pedestrians, and the like. The vehicle 10 is an example of a "host vehicle" of the present disclosure, and the host vehicle image 10A is an example of a "host vehicle image" of the present disclosure.

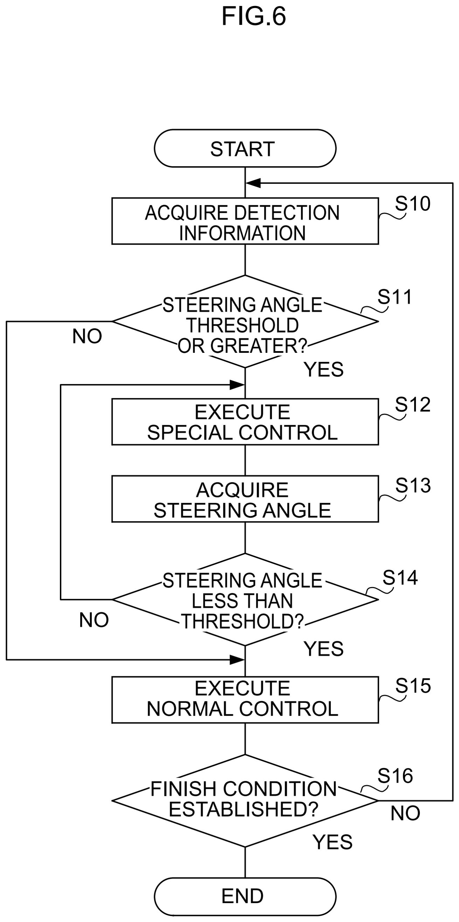

Fig. 6 is a flowchart illustrating a flow of specific processing executed by the display control device 50. The CPU 51 reads the display control program 52A from the ROM 52, and performs the specific processing by expanding and executing the display control program 52A in the RAM 53. As an example, the specific processing is executed automatically by being repeated at a given time interval.

At step S10 illustrated in Fig. 6, the CPU 51 acquires detection information detectable by the vehicle 10. The detection information includes, for example, a vehicle speed as detected by a vehicle speed sensor, a steering angle of the steering wheel as detected by a steering angle sensor, and captured images captured by the cameras 40. The CPU 51 then proceeds to step S11.

At step S11, the CPU 51 determines whether or not the steering angle acquired at step S10 is a threshold or above. The CPU 51 proceeds to step S12 when determined that the steering angle is the threshold or above (step S11: YES). However, the CPU 51 proceeds to step S15 when determined that the steering angle is less than the threshold (step S11: NO). In the present exemplary embodiment, as an example, the steering angle threshold is set to "90°".

At step S12, the CPU 51 executes special control as display control for the first display unit 24. Placement control to place the vehicle image 10A at a pre-set position, and change control to change a display mode of the surrounding condition image to pre-set content, are executed in the special control. Note that a display example of the first display unit 24 when the special control has been executed is described later.

At step S13, the CPU 51 acquires the steering angle contained in re-detected detection information. The CPU 51 then proceeds to step S14.

At step S14, the CPU 51 determines whether or not the steering angle acquired at step S13 is less than a threshold. The CPU 51 proceeds to step S15 when determined that the steering angle is less than the threshold (step S14: YES). However, the CPU 51 returns to step S12 when determined that the steering angle is not less than the threshold (step S14: NO).

At step S15, the CPU 51 executes normal control as the display control for the first display unit 24. In the normal control, the display content of the first display unit 24 is updated in real time interlocked to the acquired detection information. For example, if the vehicle speed has changed, the CPU 51 immediately updates a numerical value displayed in vehicle speed information 72 (see Fig. 8 etc.), described later, displayed on the first display unit 24 according to this change. Moreover, in cases in which the vehicle 10 has moved left or right, the CPU 51 moves the vehicle image 10A in the corresponding direction to follow this movement.

At step S16, the CPU 51 determines whether or not a predetermined finish condition has been established. The CPU 51 ends the specific processing when determined that the finish condition has been established (step S16: YES). However, the CPU 51 returns to step S10 when determined that the finish condition has not been established (step S16: NO). As an example, the CPU 51 determines that the finish condition has been established when the ignition switch of the vehicle 10 has been switched OFF.

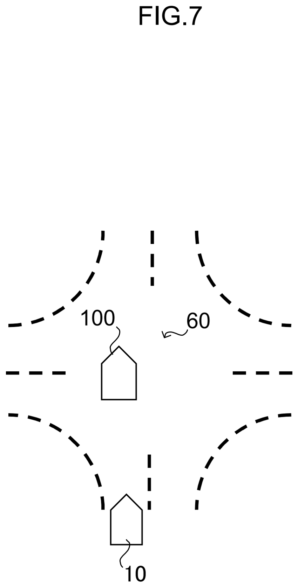

Next, description follows regarding changes to the display content of the first display unit 24 based on the above specific processing, with reference to Fig. 7 to Fig. 12.

Fig. 7 is a first explanatory diagram to explain a driving situation of the vehicle 10 at an intersection 60.

Fig. 7 illustrates the vehicle 10 entering the intersection 60 to go straight on, and ahead thereof an other-vehicle 100 also going straight on at the intersection 60.

The intersection 60 is a location where plural roads intersect, and is an architecture where traffic control is performed by non-illustrated traffic lights, signs, or the like.

In Fig. 7, the vehicle 10 is proceeding along a straight road just before the intersection 60, and the other-vehicle 100 has entered the intersection 60 ahead of the vehicle 10, and is passing through the intersection 60 in the same straight ahead direction.

Fig. 8 is a first explanatory diagram illustrating a display example displayed on a display area X of the first display unit 24. Specifically, Fig. 8 is a display example corresponding to the driving situation of the vehicle 10 illustrated in Fig. 7. Note that in the display example illustrated in Fig. 8 there are, as an example, three vehicle lanes displayed in the display area X, however, there is no limitation thereto. A configuration may be adopted in which one or two vehicle lanes, or four or more vehicle lanes, are displayed according to the actual number of vehicle lanes and display control specification. Moreover, the number of vehicle lanes displayed may, or may not, match the number of vehicle lanes in the actual driving environment. Note that similar applies to subsequent display examples of the first display unit 24.

As illustrated in Fig. 8, a shift information 70 and a vehicle speed information 72 are displayed at the top of the display area X.

The shift information 70 is information indicating the shift position of the vehicle 10, and "D" is displayed in Fig. 8 to indicate that the shift position is the D range.

The vehicle speed information 72 is information indicating the speed of the vehicle 10, and in Fig. 8 "54 km/h" is displayed to indicate that the vehicle speed is 54 km/h.

Moreover, a vehicle image 10A and a surrounding condition image are displayed below the shift information 70 and the vehicle speed information 72. The surrounding condition image includes a road surface image 65 and an other-vehicle image 10B.

A demarcation line image 67 to demarcate the vehicle lanes on the road is displayed on the road surface image 65. The road is thereby demarcated into three vehicle lanes, a central vehicle lane 65A, a left vehicle lane 65B on the left side, and a right vehicle lane 65C on the right side. In Fig. 8 the vehicle image 10A and an other-vehicle image 10B are displayed on the central vehicle lane 65A.

The vehicle image 10A is an illustrative image to illustrate the vehicle 10 generated based on a given illustrative design represented by the illustration data 52D. As an example, the vehicle 10 is traveling at width direction center of a travel lane on a straight road positioned just before the intersection 60. The vehicle image 10A is depicted based on position information of the vehicle 10 acquired from demarcation lines of the road, and so the actual traveling position is reflected in the displayed position. This means that the vehicle image 10A in Fig. 8 is also displayed from the viewpoint of a virtual viewpoint so as to be positioned at a width direction center of the central vehicle lane 65A.

The other-vehicle image 10B is an illustrative image illustrating the other-vehicle 100, which is a vehicle ahead of the vehicle 10, generated based on a given illustrative design represented by the illustration data 52D. This means that in Fig. 8, the other-vehicle image 10B is displayed inside the central vehicle lane 65A, and above the vehicle image 10A in the diagram.

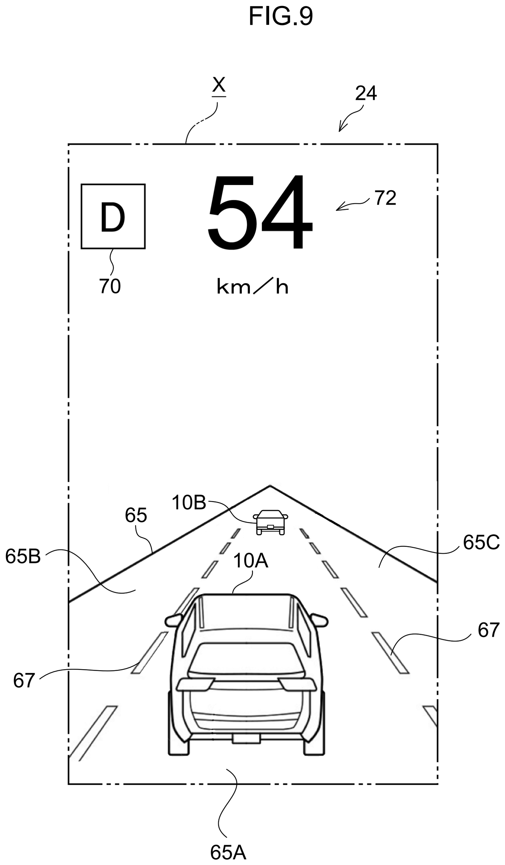

Fig. 9 is a second explanatory diagram illustrating a display example displayed on the display area X of the first display unit 24. Specifically, Fig. 9 illustrates a state when the normal control at step S15 of Fig. 6 has been executed.

The state illustrated in Fig. 9 is one in which the vehicle 10 has moved from the state illustrated in Fig. 7 toward the left side inside the travel lane on the straight road positioned just before the intersection 60.

In such cases, the CPU 51 executes the normal control, and based on the detection information acquired reflects change in the actual traveling position in the display. For example, the CPU 51 recognizes changes to the left-right position and steering angle of the vehicle 10 from the detection information, correlations to vehicle lane, and the like, and ascertains that the vehicle 10 has moved to the left side. The vehicle image 10A in Fig. 9 is accordingly displayed moved to the left side inside the central vehicle lane 65A.

This means that when normal control is executed, the vehicle image 10A moves in a corresponding direction to follow movement of the vehicle 10. Moreover if, for example, the vehicle 10 or the other-vehicle 100 has changed lane when normal control is being executed, the vehicle image 10A or the other-vehicle image 10B is displayed moving from the central vehicle lane 65A to the left vehicle lane 65B or the right vehicle lane 65C according to this movement.

Furthermore, when normal control is executed, in addition to positional changes of the vehicle image 10A and the other-vehicle image 10B, sometimes the shape of the demarcation line image 67 also changes. Description follows regarding changes to the shape of the demarcation line image 67, while illustrating types of the demarcation line image 67 in the present exemplary embodiment.

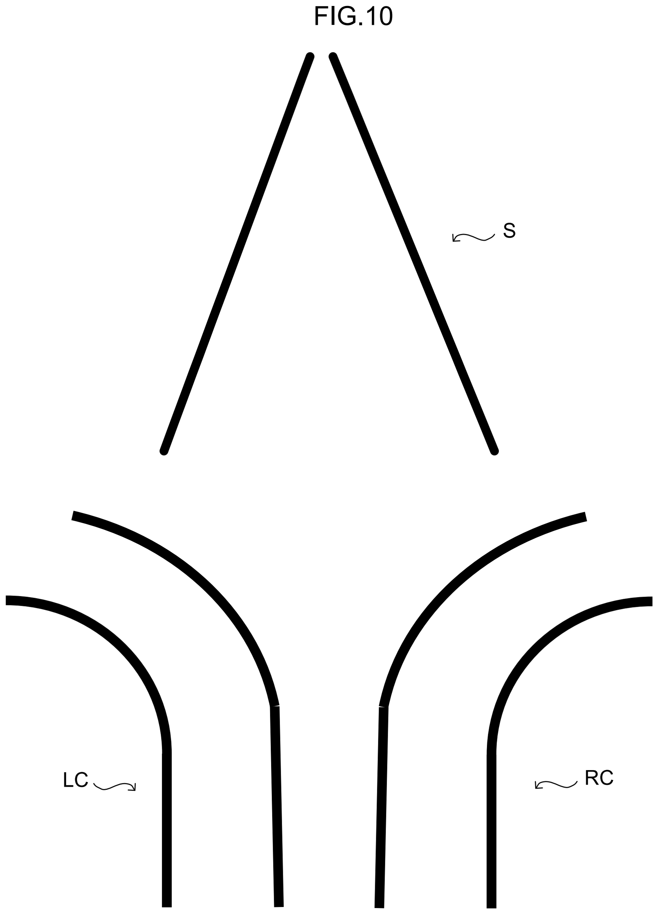

Fig. 10 is an explanatory diagram to explain types of the demarcation line image 67. Fig. 10 illustrates three types of the demarcation line image 67, a straight line display S, a left curve display LC, and a right curve display RC.

The straight line display S is configured by two straight lines displayed when the vehicle 10 is going straight on. The left curve display LC includes two curved line segments that curve toward the left on progression toward the top of the page to indicate a curve toward the left. The right curve display RC includes two curved line segments that curve toward the right on progression toward the top of the page to indicate a curve toward the right.

The display of the demarcation line image 67 is dynamically switched by the CPU 51. In the present exemplary embodiment, the CPU 51 is configured to use a combination of both images captured by the cameras 40 and steering angle from the steering angle sensor to predict the progression direction of the vehicle 10, and to decide the type of demarcation line image 67 that should be displayed based on the prediction results.

Namely, the CPU 51 recognizes the actual vehicle lane shape by analyzing captured images, predicts the progression direction based on the steering angle, and decides the display content of the demarcation line image 67 using both information. For example, the straight line display S is displayed when the steering angle is within a given range, and when the steering angle has exceeded this range, the left curve display LC is displayed when a rotation direction is counterclockwise, and the right curve display RC is displayed when the rotation direction is clockwise. Note that an upper limit value of steering angle employed when switching from straight line display S to left curve display LC or right curve display RC is set so as to be smaller than a threshold of steering angle (for example, 90°) employed to determine whether or not to execute special control.

Note that there is no limitation to the configuration described above, and a configuration may be adopted in which a decision regarding which demarcation line image 67 should be displayed is made based on the captured images alone, or based on the steering angle alone.

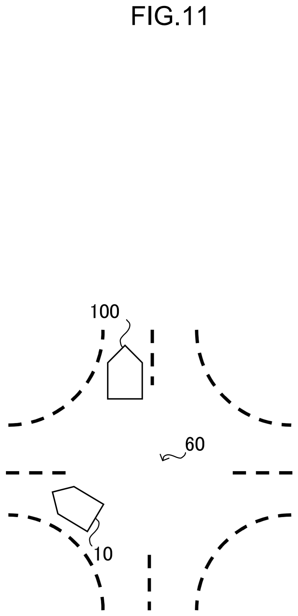

Fig. 11 is a second explanatory diagram to explain a driving situation of the vehicle 10 at the intersection 60.

The intersection 60 illustrated in Fig. 11 includes the vehicle 10 performing a left turn at the intersection 60, and the other-vehicle 100 going straight on and passing through the intersection 60.

In Fig. 11, the vehicle 10 has entered the intersection 60, and is executing a left turn operation by turning with a steering angle of 90° or greater in a left (counterclockwise) direction. On the other hand, the other-vehicle 100 has entered the intersection 60 earlier than the vehicle 10, and is continuing going straight on without changing progression direction so as to pass through the intersection 60.

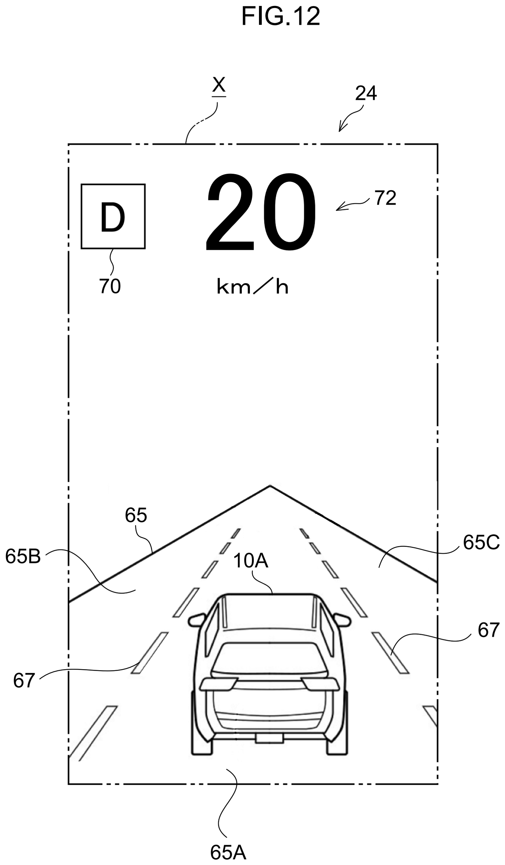

Fig. 12 is a third explanatory diagram illustrating a display example displayed on the display area X of the first display unit 24. Specifically, Fig. 12 is a display example corresponding to the driving situation of the vehicle 10 illustrated in Fig. 11, and illustrates a state in which the special control of step S12 of Fig. 6 has been executed.

In the special control, part of the display content is updated based on the detection information acquired, similarly to in the normal control, however, the display content of another part thereof is fixed to a given content.

For example, in Fig. 12, the vehicle speed information 72 is updated to "20 km/h" based on the detection results from the vehicle speed sensor to indicate that the vehicle speed is 20 km/h.

As the placement control in the special control here, the CPU 51 displays the vehicle image 10A fixed to the width direction center of the road surface image 65 illustrating the travel lane travelled by the vehicle 10. The vehicle image 10A is thereby displayed fixed to the width direction center of the central vehicle lane 65A in Fig. 12.

Furthermore, as the change control in the special control, the CPU 51 performs control to change the other-vehicle image displayed as the surrounding condition image to a specific state that is not perceivable to a driver. This means that in Fig. 12, even though the presence of the other-vehicle 100 is recognized based on the detection information acquired, and ordinarily the other-vehicle image 10B would be in a displayable state, the other-vehicle image 10B is actually erased from the central vehicle lane 65A. Note that reference here to "specific state" means any state not perceptible to a driver, and another method may be employed instead of erasing such as, for example, superimposing an opaque mask thereon, same color processing, or the like.

In addition thereto, as the change control in the special control, the CPU 51 also performs control to fix a display mode of the road surface image 65 to a straight line representation of a straight road. The demarcation line image 67 displayed in Fig. 12 is thereby fixed to the straight line display S illustrated in Fig. 10.

After this, the CPU 51 then executes the normal control in a case in which the acquired steering angle has become less than the threshold, and returns display of the vehicle image 10A or the surrounding condition image to the display state prior to the special control being executed. This means a state in which, for example when the vehicle 10 has moved left or right, the vehicle image 10A is moved in the corresponding direction to follow this movement. Moreover, the other-vehicle image 10B is displayed on the first display unit 24 in cases in which the presence of the other-vehicle 100 is recognized based on the acquired detection information.

Issues will now be described that might arise were the normal control to have been continued, without executing the special control, even though the acquired steering angle is the threshold value or greater.

### (1) Cases when the position of vehicle image 10A is not displayed fixed.

The lateral direction display position of the vehicle image 10A frequently fluctuates, resulting in the display breaking up. For example, the vehicle image 10A repeatedly moves left and right inside the central vehicle lane 65A, leading to a drop in noticeability.

Due to the vehicle image 10A being depicted based on the position information of the vehicle 10 acquired from the demarcation lines of the road, the position information becomes unstable in locations where there are interruptions to the demarcation lines, such as at the intersection 60, with this possibly leading to the display position shaking left and right, display being performed at a non-natural position, or the like.

### (2) Cases in which the other-vehicle image is not changed to the specific state.

The behavior of the other-vehicle 100 is displayed in a different form to the actual driving situation. For example, while the vehicle 10 is in the middle of turning left at the intersection 60, there is a concern that the other-vehicle 100, which is a vehicle ahead going straight on, might be displayed so as to give the false impression that the other-vehicle 100 has changed vehicle lane completely in the right direction.

Specifically, as illustrated in Fig. 11, in a situation in which the vehicle 10 is turning left and the other-vehicle 100 is continuing going straight on, the other-vehicle 100 gradually gets further away toward the right due to the relative positional relationship as viewed from the viewpoint of the vehicle 10.

In such a situation, when the other-vehicle image 10B is displayed as normal based on the acquired detection information, the other-vehicle image 10B illustrated in Fig. 8 is depicted so as to move to the right vehicle lane 65C positioned at the right side of the central vehicle lane 65A, with the possibility that this might be misinterpreted as the other-vehicle 100 having changed vehicle lane in the right direction.

### (3) Cases in which the demarcation line image 67 is not fixed to the straight line display S.

The display type of the demarcation line image 67 switches frequently resulting in display becoming confused. For example, the demarcation line image 67 is frequently switched from the straight line display S illustrated in Fig. 10 to the left curve display LC, or from the right curve display RC to the left curve display LC, etc.

In particular, in locations where the demarcation lines of the road surface are temporarily interrupted, such as at the intersection 60, the CPU 51 must predict a proceeding road shape (straight line or curve) based on the steering angle, orientation, and the like of the vehicle 10. However, due to instantaneous fluctuations in this information, the determination of straight line or curve switches frequently while turning left or turning right at the intersection 60 and, as a result thereof, the display of the demarcation line image 67 switches many times in a short period of time, resulting in a loss of noticeability.

However, in the display control device 50 according to the present exemplary embodiment, the CPU 51 executes the special control in a case in which the acquired steering angle of the vehicle 10 is the threshold value or greater. The display control device 50 accordingly controls the display content appropriately in situations in which the steering angle is the threshold value or greater, making it easy for the surrounding condition to be recognized by the driver.

Moreover, in the display control device 50, as the change control in the special control, the CPU 51 changes the other-vehicle image 10B being displayed as the surrounding condition image to a specific state that is not perceivable by the driver. The display control device 50 accordingly, by changing the other-vehicle image 10B to the specific state, prevents movement of the other-vehicle image 10B from being represented differently to the movement of the other-vehicle 100, enabling misrecognition by the driver to be suppressed.

Moreover in the display control device 50, as the placement control in the special control, the CPU 51, for example, displays the vehicle image 10A fixed to a width direction central position of the central vehicle lane 65A in the road surface image 65. The display control device 50 accordingly raises the stability of display, and makes it easier for the driver to ascertain the position of the vehicle 10.

Moreover, in the display control device 50, as the change control in the special control, the CPU 51 displays a display mode of the road surface image 65 fixed to a straight line representation indicating a straight road. The display control device 50 thereby suppresses display flickering, making it easier for the driver to recognize the progression direction.

Moreover, in the display control device 50, in cases in which the acquired steering angle has become less than the threshold, the CPU 51 returns display of the vehicle image 10A or the surrounding condition image to the display state prior to the special control being executed. The display control device 50, by returning to the display state prior to the special control being executed in this manner, maintains appropriate display control according to the driving situation, making it easier for the driver to ascertain the surrounding conditions.

Moreover, in the display control device 50, the first display unit 24 is a meter display provided at a vehicle front side of the driver's seat of the vehicle 10. This means that in the display control device 50, even in a situation in which the steering angle is the threshold value or greater, the driver is still able to intuitively ascertain the surrounding condition along an extension of a forward field of view, enabling appropriate situational awareness while maintaining noticeability.

### Other

Although detailed explanation has been given above regarding exemplary embodiments of the present disclosure, with reference to the appended drawings, the technical scope of the present disclosure is not limited by such examples. It will be apparent to a person of ordinary skill in the art of the present disclosure that various modifications and improvements can be arrived at within the scope of the technical idea as recited by the scope of the patent claims, and obviously such modifications and improvements should be understood as belonging to the technical range of the present disclosure.

The advantageous effects described above for the above exemplary embodiments are merely explanatory and indicative, and are not limited to those described in the above exemplary embodiments. Namely, in the technology according to the present disclosure, together with the advantageous effects described in the above exemplary embodiments, or instead of the advantageous effects described in the above exemplary embodiments, other advantageous effects may be exhibited as will be apparent from the above exemplary embodiments to a person of ordinary skill in the art of the present disclosure.

The processing described in the above exemplary embodiments can be implemented by a dedicated hardware circuit. In such cases, the processing may be executed by a single hardware unit alone, or may be executed by plural hardware units.

In the above exemplary embodiments, the display control program 52A was stored in the ROM 52. However, there is no limitation thereto, and the display control program 52A may be stored in the storage 54.

Although in the above exemplary embodiments an example of the steering angle threshold for determining whether or not to execute the special control is set at "90°", there is no limitation thereto. The steering angle threshold may, for example, be any value larger than an upper limit of the steering angle employed when switching is made from the straight line display S to the left curve display LC or to the right curve display RC, and may be smaller or larger than 90°. Namely, the threshold can be set appropriately such that the special control is executed in situations in which there is a need for a steering input greater than when switching from driving in a straight line to driving in a curve. Note that in order to prevent the control state performing unstable transitions ("hunting") when the steering angle is in the vicinity of the threshold and frequently moves above or below the threshold, a configuration may be adopted in which, for example, a first threshold employed to determine execution of special control is set to a different value from a second threshold employed to determine the ending of the special control. The display control stability can be raised by imparting hysteresis characteristics to the threshold in this manner.

Although in the above exemplary embodiments, as the placement control in the special control, the vehicle image 10A was displayed fixed at a pre-set position-namely, at the width direction center of the road surface image 65-the position of fixed display is not limited thereto. For example, as the pre-set position, the vehicle image 10A may be displayed fixed at a position shifted toward the left or the right in the width direction, or at a position slightly on the near side or slightly on the far side with respect to the progression direction. In this way, the fixed display position can be appropriately changed in accordance with balancing the display object with noticeability, the design policy regarding guiding the gaze of the driver, and the like.

Although in the above exemplary embodiments, as the change control in the special control, processing to change the other-vehicle image 10B being displayed as the surrounding condition image to a specific state that is not perceivable to the driver, and processing to display the display mode of the road surface image 65 fixed to the straight line representation (straight line display S), are executed, there is no limitation thereto. For example, as such change control, a configuration may be adopted in which only one of the above is executed. Moreover, as the change control, in addition to both of the above,, a configuration may be adopted in which display of an object image, illustrating a traffic light or sign and displayed as the surrounding condition image, is changed in style by consideration to noticeability, such as being symbolized to a simple icon, or displayed semi-transparent. Adopting such an approach enables a display mode to be selectively changed for elements in the surrounding condition image that impart an effect to the visual load and information density during driving.

Although the above exemplary embodiment was configured to execute both placement control and change control as the special control, there is no limitation thereto. As the special control, a configuration may be adopted in which only one of the above is executed, for example, a configuration in which the vehicle image 10A is displayed fixed at a given position using only placement control, or a configuration in which the display mode of the surrounding condition image is changed using only change control.

In the above exemplary embodiment, even in cases in which the acquired steering angle is the threshold value or greater, the CPU 51 may be configured to, exceptionally, maintain other-vehicle image display in a situation in which the other-vehicle is determined to have entered the path of the vehicle 10. For example, the CPU 51 predicts the path of both the vehicle 10 and the other-vehicle based on detection information. When performing path prediction, a timeseries progression trajectory is generated by prediction computation using vehicle speed from the vehicle speed sensor, steering angle from the steering angle sensor, and the peripheral environment (vehicle lane shape etc.) acquired from the cameras 40. The CPU 51 then determines that there is a risk of collision or near miss between the vehicle 10 and the other-vehicle in cases in which the progression trajectories have been determined to intersect within a given period of time, and maintains display of the other-vehicle image illustrating the other-vehicle for the purpose of drawing the driver's attention thereto.

In the above exemplary embodiment, the CPU 51 may be configured so as to, exceptionally, maintain the other-vehicle image display, even in a case in which the acquired steering angle is the threshold value or greater, in a situation in which determination is that the other-vehicle has performed a call for attention using a given notification means, such as horn sounding, light flashing, or the like. For example, the CPU 51 analyzes other-vehicle behavior information based on captured images acquired by the cameras 40 and audio information from an audio sensor or the like, and maintains other-vehicle image display to indicate the other-vehicle when determined that the behavior has satisfied a given notification condition.

In the above exemplary embodiments, a configuration may be adopted in which the CPU 51 continues normal control without executing special control even in a case in which the acquired steering angle is the threshold value or greater, if it is determined that the steering wheel 16 has been rotated at high speed. For example, the CPU 51 computes a steering speed (rate of steering angle change) based on timewise change in steering angle acquired from the steering angle sensor, and when the steering speed is a given value or greater, determines this to be a temporary steering operation, such as a course change or lane change, and suppresses special control and executes normal control, even though the steering angle is the threshold value or greater. For example, by maintaining display of the other-vehicle image 10B in such normal control, a change in noticeability in response to short-lasting steering is prevented, enabling display stability to be secured.

In the above exemplary embodiment, a configuration may be adopted in which, in a case in which the acquired steering angle is the threshold value or greater, the CPU 51 temporarily stops displaying unnecessary objects so as to emphasize the noticeability of the vehicle image 10A when it is determined that the vehicle 10 is approaching a location where a mis-operation occurred in the past. In such cases, the CPU 51 records, as timeseries data, travel history information of the vehicle 10 in the storage 54, and registers locations at which past behavior corresponding to a mis-operation-such as lane departure, sudden braking, or abnormal steering angle-occurred as risk points. When the relative distance between the current position of the vehicle 10 and one of the risk points is determined to be within a given range, unnecessary object images, such as other vehicles and background objects, are temporarily hidden to focus the driver's attention, thereby reducing the information density of the first display unit 24. This enables a display with high noticeability at the risk points and helps prevent recurrence of mis-operation.

In the above exemplary embodiment, a configuration may be adopted in which the CPU 51 groups plural objects and displays them as a simplified icon in regions where there is a concentration of gaze in a case in which the acquired steering angle is the threshold value or greater. For example, the CPU 51 analyzes placement information of surrounding objects acquired by the cameras 40, infrared sensors, and the like, and also analyzes driver gaze information acquired from a non-illustrated gaze detection camera. The CPU 51 then groups these objects together when determined that there are a given number or greater of objects being gazed at within a given region, and displays these as a simplified icon on the first display unit 24 after extracting a representative attribute thereof. When this is performed, the CPU 51 compares the object classes (classifications) determined using the object detection model 52C stored in the ROM 52 and extracts objects belonging to the same or similar class as duplicate information, thereby enabling realization of display that maintains noticeability while reducing the information density by displaying them all at once.

In the above exemplary embodiments, a configuration may be adopted in which the CPU 51 displays only objects not yet gazed at in a case in which the acquired steering angle is the threshold value or greater, and sequentially fades out objects already gazed at. For example, the driver gaze direction is detected using a gaze detection camera provided inside the vehicle cabin 12, and the number of times gazed at is counted for each object by the CPU 51 analyzing the captured images from such a camera. Fade out display is then performed incrementally on object images corresponding to objects determined to have a gaze count of a given number or greater, enabling these to be eventually excluded from being the subject of display on the first display unit 24. This thereby enables information that has already been seen by the driver to be suppressed, raising the noticeability for new objects that should be gazed at.

Although in the above exemplary embodiments an example has been given in which the first display unit 24, which is a meter display, is an example of a "display unit" of the present disclosure, examples of the "display unit" are not limited to meter displays. For example, the examples of the "display unit" may be other displays, such as a center display, a head-up display (HUD), or the like. Moreover, examples of the "display unit" may be a combination of plural displays, such as a meter display and a center display.

In the above exemplary embodiment the display control device 50 executed the specific processing illustrated in Fig. 6. However, there is no limitation thereto, and the specific processing may be executed by cooperation between the display control device 50 and another ECU.

Note that the various processing executed by the CPU 51 reading software (a program) in the above exemplary embodiments may be executed by various processors other than a CPU. Examples of such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the various processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Moreover, although an embodiment has been explained in the above exemplary embodiment in which the display control program 52A is pre-stored (installed) in the ROM 52, there is no limitation thereto. The display control program 52A may be provided in a format recorded on a recording medium such as a compact disk read only memory (CD-ROM), a digital versatile disk read only memory (DVD-ROM), a universal serial bus (USB) memory, or the like. Moreover, the display control program 52A may in a format downloaded from an external device over a network. Note that the technology of the present disclosure is applicable to programs and program products.

## Claims

1. A display control device (50), comprising
a control unit (51B) that is configured to:
display a host vehicle image (10A) illustrating a host vehicle (10) and a surrounding condition image illustrating surrounding conditions of the host vehicle (10) at a display unit (24); and
when an acquired steering angle of the host vehicle (10) is a threshold value or greater,
execute control to dispose the host vehicle image (10A) at a pre-set position, and/or
execute control to change a display mode of the surrounding condition image to pre-set content.

2. The display control device (50) of claim 1, wherein the control unit (51B) is configured to, in a case in which the acquired steering angle is the threshold value or greater, change an other-vehicle image (10B) illustrating an other-vehicle (100) displayed as the surrounding condition image to a specific state that is not perceivable by a driver of the host vehicle (10).

3. The display control device (50) of claim 1, wherein the control unit (51B) is configured to, in a case in which the acquired steering angle is the threshold value or greater, display the host vehicle image (10A) fixed at a width direction central position of a road surface image (65) that illustrates a travel lane in which the host vehicle (10) is traveling and that is being displayed as the surrounding condition image.

4. The display control device (50) of claim 1, wherein the control unit (51B) is configured to, in a case in which the acquired steering angle is the threshold value or greater, display a road surface image (65) that illustrates a travel lane in which the host vehicle (10) is traveling and that is being displayed as the surrounding condition image, with a display mode of the road surface image fixed to a straight line representation illustrating a straight road.

5. The display control device (50) of any one of claims 1 to 4, wherein the control unit (51B) is configured to, in a case in which the acquired steering angle falls below the threshold value, return display of at least one of the host vehicle image (10A) or the surrounding condition image to a display state prior to the control.

6. The display control device (50) of any one of claims 1 to 5, wherein the display unit (24) is a meter display provided at a vehicle front side of a driver's seat of the host vehicle (10).

7. A display control method executable by a computer to perform processing, the processing comprising:
displaying a host vehicle image (10A) illustrating a host vehicle (10) and a surrounding condition image illustrating surrounding conditions of the host vehicle (10) at a display unit (24); and
when an acquired steering angle of the host vehicle (10) is a threshold value or greater, performing at least one of:
executing control to dispose the host vehicle image (10A) at a pre-set position, or
executing control to change a display mode of the surrounding condition image to pre-set content.

8. A non-transitory recording medium storing a display control program (52A) executable by a computer to perform processing, the processing comprising:
displaying a host vehicle image (10A) illustrating a host vehicle (10) and a surrounding condition image illustrating surrounding conditions of the host vehicle (10) at a display unit (24); and
when an acquired steering angle of the host vehicle (10) is a threshold value or greater, performing at least one of:
executing control to dispose the host vehicle image (10A) at a pre-set position, or
executing control to change a display mode of the surrounding condition image to pre-set content.
